Europäisches Patentamt

European Patent Office

Office européen des brevets

(11) Veröffentlichungsnummer: **0 362 802**
**A2**

## EUROPÄISCHE PATENTANMELDUNG

(21) Anmeldenummer: 89118351.9

(22) Anmeldetag: 03.10.89

(51) Int. Cl.⁵: **B05B 5/04**

(30) Priorität: 07.10.88 DE 8812638 U

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **NORDSON CORPORATION**
**28601 Clemens Road**
**Westlake Ohio 44145-1148(US)**

(72) Erfinder: **Claassen, Henning J.**
**Industriegebiet Hafen**
**D-2120 Lüneburg(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) Vorrichtung zum Aufschmelzen von hochpolymeren, thermoplastischen Werkstoffen, insbesondere Klebstoffen.

(57) Eine Vorrichtung zum Aufschmelzen von hochpolymeren, thermoplastischen Werkstoffen, insbesondere Klebstoffen, weist einen Vorratsbehälter für den Ausgangs-Werkstoff, eine an den Vorratsbehälter angeschlossene, beheizbare Schmelzkammer, und eine Fördereinrichtung für den Transport des aufgeschmolzenen Werkstoffes aus der Schmelzkammer zur Verarbeitungsstelle auf; ein in den Vorratsbehälter einschiebbarer Kolben dient zum Transport des Ausgangs-Werkstoffes aus dem Vorratsbehälter in die Schmelzkammer.

Fig. 1

## Vorrichtung zum Aufschmelzen von hochpolymeren, thermoplastischen Werkstoffen, insbesondere Klebstoffen

Die Erfindung betrifft eine Vorrichtung zum Aufschmelzen von hochpolymeren, thermoplastischen Werkstoffen, insbesondere Klebstoffen, wie Schmelzklebstoffen oder Haftschmelzklebern, wie sie für selbstklebende Artikel benötigt werden, der im Oberbegriff des Anspruchs 1 angegebenen Gattung.

Bei der Verarbeitung thermoplastischer, hochpolymerer Werkstoffe ist die Stabilität einer der wesentlichen Parameter, da sich diese Werkstoffe während der Verarbeitung in einem besonders angeregten Zustand befinden. Denn im geschmolzenen und damit flüssigen Zustand sind thermoplastische, hochpolymere Werkstoffe thermisch und/oder chemischoxidativen Reaktionen wesentlich leichter zugänglich als im halbfesten oder festen Aggregatzustand.

Trotzdem müssen hochschmelzende polymere, thermoplastische Werkstoffe, wie beispielsweise Polykarbonate, oder hochschmelzende Konstruktions-Schmelzklebstoffe, wie beispielsweise Polyester, Copolyester, Polyamide und Copolyamide, wegen ihres hohen Erweichungspunktes in der Regel mit sehr hohen Aufschmelztemperaturen in der Größenordnung von 200° C bis 350 °C verarbeitet werden. Diese Verarbeitungstemperaturen lassen sich zwar mit herkömmlichen Verarbeitungsextrudern für thermoplastische, hochpolymere Werkstoffe ohne weiteres erreichen; die in einem solchen Extruder auftretende dynamische Scherbeanspruchung und damit Erwärmung der Werkstoffe ist jedoch für viele Thermoplaste ungünstig. Denn bei der hohen Scherbelastung, insbesondere beim diskontinuierlichen Betrieb, wie er beispielsweise für das Spritzen von polymeren Werkstoffen erforderlich ist, lassen sich Veränderungen in der Molekular-Struktur der Werkstoffe nicht ausschließen. Solche Veränderungen sind in aller Regel mit einer Änderung der Eigenschaften des Werkstoffes verbunden, so daß sie sicher und zuverlässig vermieden werden müssen.

Eine Lösung dieses Problems wird in der europäischen Patentanmeldung 88 107 964.4, eingereicht am 18. Mai 1988, beschrieben, wobei die Schmelzvorrichtung als getrennte, herausnehmbare Schmelzeinheit mit einer Vielzahl von in Fließrichtung des Werkstoffes verlaufenden Durchlässen ausgebildet ist; an die Schmelzeinheit schließt sich die ebenfalls in Fließrichtung des Werkstoffes verlaufende Sammelkammer mit der ebenfalls in Fließrichtung liegenden Auslaßöffnung an. Dabei ist eine Transporteinrichtung zur Förderung des Ausgangs-Werkstoffes aus dem Vorratsbehälter durch die Durchlässe der heizbaren Schmelzvorrichtung in die Sammelkammer vorgesehen.

Nachteilig bei dieser Schmelzvorrichtung ist der relativ große apparative Aufwand, wie er für viele Anwendungsfälle nicht benötigt wird.

Eine weitere Aufschmelzvorrichtung geht aus der DE-PS 28 36 545 hervor, wobei sich unter dem Vorratsbehälter für den Ausgangswerkstoff eine beheizbare Schmelzkammer befindet; diese Schmelzkammer wird durch den als Schmelzrost ausgebildeten, durchbrochenen Boden des Vorratsbehälters gebildet, unter dem sich eine beheizbare Auffangwanne befindet. Diese Aufschmelzvorrichtung ermöglicht nur ein "statisches" Abschmelzen, da sich die aufgeschmolzene Masse nur in der Auffangwanne bzw. im Schmelzrost befindet, während der Vorratsbehälter im wesentlichen noch den Ausgangs-Werkstoff, im allgemeinen in Granulat-Form, enthält. Erst wenn eine ausreichende Menge der aufgeschmolzenen Masse aus der Auffangwanne abgezogen worden ist, kann der Ausgangs-Werkstoff aus dem Vorratsbehälter unter dem Einfluß der Schwerkraft nach unten rutschen und dadurch in den eigentlichen Schmelzbereich gelangen.

Hier besteht jedoch die Gefahr, daß die Fließgeschwindigkeit, insbesondere bei hochviskosen und/oder hochempfindlichen, hochpolymeren, thermoplastichen Werkstoffen zu gering ist, so daß es zu einer zu intensiven Wärmebehandlung und damit zu vorzeitigen Reaktionen bereits im Schmelzrost oder auch im Vorratsbehälter kommt.

Der Erfindung liegt deshalb die Aufgabe zugrunde, eine Vorrichtung zum Aufschmelzen von hochpolymeren, thermoplastischen Werkstoffen, insbesondere Klebstoffen, der angegebenen Gattung zu schaffen, bei der die oben erwähnten Nachteile nicht auftreten.

Insbesondere soll eine Vorrichtung vorgeschlagen werden, mit der sich auch hochviskose und/oder hochempfindliche Substanzen einwandfrei verarbeiten lassen.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen darauf, daß nun eine Art "forced-feeding" des Ausgangs-Werkstoffes aus dem Vorratsbehälter in die Schmelzkammer erfolgt, wodurch sich überraschend eine stark erhöhte Schmelzleistung ohne jede Beeinträchtigung auch höchstempfindlicher Werkstoffe durch vorzeitige Reaktionen ergibt.

Dies dürfte darauf zurückzuführen sein, daß nun definierte Mengen des Ausgangs-Werkstoffes aus dem Vorratsbehälter der Schmelzkammer zugeführt werden, und zwar mit einer Genauigkeit, wie sie beim "statischen" Abschmelzen nicht erreicht werden kann, bei dem Ausgangs-Werkstoff aus dem Vorratsbehälter nur nach unten in die Schmelzkammer "nachrutscht".

Bei diesem "Zwangstransport" können nun die Viskosität und die Reaktionsempfindlichkeit des Werkstoffes berücksichtigt werden, so daß sich insoweit optimale Bedingungen ergeben.

Bei der Verarbeitung von Werkstoffen mit niedrigem Erweichungspunkt, die also rasch verflüssigen, hat es sich als zweckmäßig herausgestellt, wenn der Transportkolben mit einer an der Innenwand des Vorratsbehälters anliegenden Dichtung versehen wird, beispielsweise einer Gummimanschette, um das Austreten des verflüssigten Werkstoffes auszuschließen.

Zweckmäßigerweise befindet sich der Vorratsbehälter in einer wärmeisolierenden Haube. Dann kann der Druckkolben in den Deckel dieser Wärmehaube integriert werden, so daß nach wie vor die erwünschte Wärmeisolierung erhalten bleibt.

Zum Nachfüllen des Vorratsbehälters kann der Deckel und somit der Kolben entweder hochgeschwenkt oder weggedreht werden, wodurch das Innere des Vorratsbehälters frei zugänglich wird.

Insbesondere bei hochempfindlichen Werkstoffen hat es sich als zweckmäßig herausgestellt, wenn über den Deckel und durch den Transportkolben hindurch ein Schutzgas in das Innere des Vorratsbehälters eingeleitet wird. Dabei kann es sich um ein Inertgas, aber auch um getrocknete Luft handeln.

In die Zuführleitung für das Schutzgas wird eine Art "Schikane" eingebaut, d. h., das von oben durch den Deckel zugeführte Schutzgas wird im Bereich des Transportgases umgeleitet und tritt seitlich im Bereich der Wände des Vorratsbehälters nach unten aus, so daß dort eine Art Schutzvorhang entsteht, der den unmittelbaren Kontakt zwischen den empfindlichen Werkstoffen und der Umgebungsatmosphäre unterbindet.

Zweckmäßigerweise werden die Innenwände von Vorratsbehälter und Schmelzkammer sowie die dem Ausgangs-Werkstoff zugewandte Fläche des Kolbens mit einem Anti-Haftmittel beschichtet, um zu verhindern, daß der aufgeschmolzene und damit gut klebende Ausgangs-Werkstoff an diesen Flächen haften kann.

Die Lage des in den Vorratsbehälter verschiebbaren Kolbens stellt ein Maß für die Füllmenge dar, so daß man eine entsprechende Skala vorsehen und damit den Kolben als Füllstands-Anzeige verwenden kann.

Die Erfindung wird im folgenden anhand von Ausführungsbeispielen unter Bezugnahme auf die beiliegenden, schematischen Zeichnungen näher erläutert. Es zeigen

Fig. 1 einen Vertikal-Mittelschnitt durch eine erste Ausführungsform einer Vorrichtung zum Aufschmelzen von hochpolymeren, thermoplastischen Werkstoffen, und

Fig. 2 eine Fig. 1 entsprechende Darstellung einer modifizierten Ausführungsform.

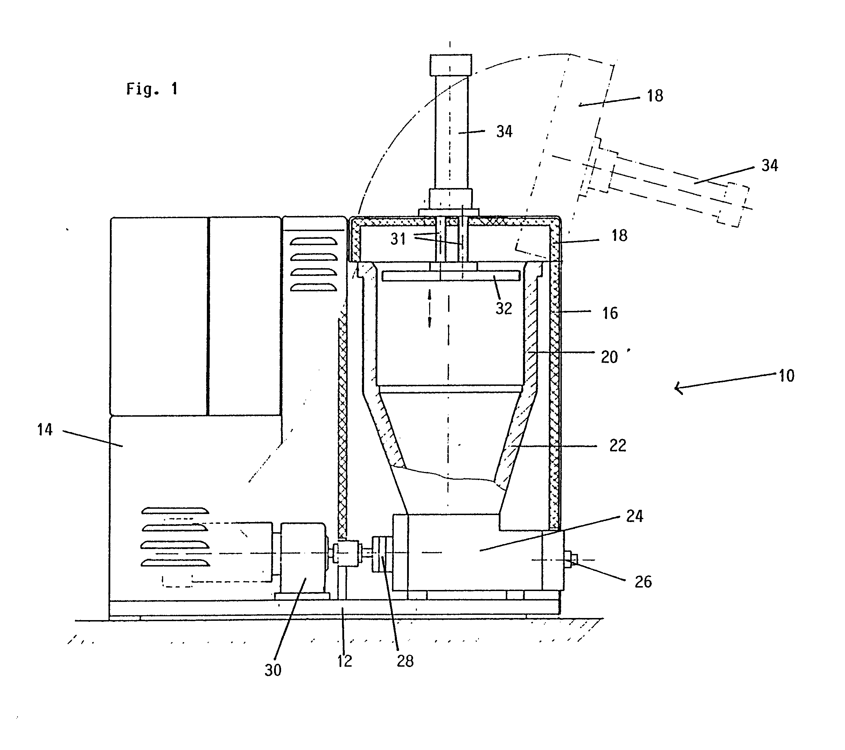

Die aus Fig. 1 ersichtliche, allgemein durch das Bezugszeichen 10 angedeutete Vorrichtung dient zum Aufschmelzen von hochpolymeren, thermoplastischen Werkstoffen, insbesondere Klebstoffen, wie Haftschmelzkleb stoffen, wie sie für selbstklebende Artikel verwendet werden. Hierfür kommen insbesondere Schmelzklebstoffe auf der Basis von Polyester oder Polyamiden in Frage.

Die Vorrichtung 10 weist eine Basisplatte 12 auf, auf der sich, gemäß der Darstellung in Fig. 1 auf der linken Seite, ein Schaltschrank 14 mit den elektrischen Steuer- und Regelkomponenten und, gemäß der Darstellung in Fig. 1 auf der rechten Seite, eine wärmeisolierende Haube 16 befinden, im folgenden auch als Wärmehaube 16 bezeichnet.

An ihrem oberen Ende ist die Wärmehaube 16 mit einem Deckel 18 versehen, der gemäß der Darstellung in Fig. 1 nach oben in eine lotrechte Lage geschwenkt werden kann, wodurch das Innere der Wärmehaube 16 frei zugänglich ist.

Als Alternative hierzu ist es auch möglich, den Deckel 18 in einer horizontalen Ebene zu schwenken und dadurch die Wärmehaube 16 zu öffnen.

In der Wärmehaube 16 befindet sich ein lotrecht angeordneter Vorratsbehälter mit einem oberen Bereich 20 mit zylinder- oder rechteck-, insbesondere quadratförmigem Querschnitt und mit einem unteren Bereich 22, dessen Wände sich nach innen konisch verjüngen, wie man in Fig. 1 erkennt.

Nach unten wird der Vorratsbehälter 20, 22 durch eine nicht näher dargestellte Auffangwanne 24 abgeschlossen, aus der die aufgeschmolzene und damit flüssige Masse mittels einer Förderpumpe, insbesondere einer Zahnradpumpe 28, einem Auslaß 26 der Verflüssigungsvorrichtung 10 und damit der weiteren Verarbeitung zugeführt wird.

Die Förderpumpe 28 wird durch einen Elektromotor 30 angetrieben, der sich in dem Schaltschrank 14 befindet.

An der Mitte des Deckels 18 ist über Stützen 31 ein in den Vorratsbehälter 20, 22 ragender, plattenförmiger Kolben angebracht, der in Richtung des Doppelpfeils in dem Vorratsbehälter 20, 22 nach oben bzw. nach unten verschoben werden kann.

Die Umfangskontur des Kolbens 32 ist der Querschnittsform des Vorratsbehälters 20, 22 angepaßt, d. h., hat der obere Teil 20 des Vorratsbehälters Zylinderform, so hat der Kolben 32 die entsprechende Scheibenform, und zwar mit einem etwas geringeren Radius als der Innenradius des Zylinders, so daß der Kolben 32 ohne Berührung mit den Innenwänden des Vorratsbehälters nach oben und nach unten verschoben werden kann.

Eine pneumatische Betätgungsvorrichtung 34 für den Kolben 32 befindet sich an der Oberseite des Deckels 18 und ist nur schematisch angedeutet.

Zum Füllen des Vorratsbehälters 20, 22 wird der Deckel 18 mit der Betätigungseinrichtung 34 und dem Kolben 32 in die aus Fig. 1 ersichtliche, durch gestrichelte Linien angedeutete Lage geschwenkt, so daß der Vorratsbehälter 20, 22 von oben her frei zugänglich ist und der im allgemeinen granulatförmige Ausgangs-Werkstoff von oben in den Vorratsbehälter eingeschüttet werden kann.

Nicht dargestellte Heizeinrichtungen, im allgemeinen Heizpatronen bzw. Widerstands-Heizelemente in der Auffangwanne 24, nämlich insbesondere in den Wänden des Bereichs 22 erwärmen den Ausgangs-Werkstoff, so daß er aufschmilzt und mittels der Förderpumpe 28 über den Auslaß 26 der weiteren Verarbeitung zugeführt werden kann.

Sowohl aufgrund des Schmelzvorgangs, als auch wegen des Abziehens von aufgeschmolzener Masse für die weitere Verarbeitung sinkt der Pegelstand des geschmolzenen Materials. Synchron hierzu wird der Kolben 32 mittels der Betätigungseinrichtung 34 in dem Bereich 20 des Vorratsbehälters nach unten verschoben, so daß sich ein zwangsweiser Transport des Ausgangsmaterials von dem Bereich 20 über den Bereich 22 zur Auffangwanne 24 ergibt.

Hat der Kolben 32 seine untere Endlage erreicht, nämlich im Bereich des Übergangs vom Bereich 20 zum Bereich 22, so wird er von der Betätigungsvorrichtung 34 wieder nach oben bewegt, und zwar in die aus Fig. 1 ersichtliche, obere Endlage.

Nun wird der Deckel 18 wieder geöffnet, so daß neues Material nachgefüllt werden kann.

Diese Zwangsförderung des Ausgangs-Werkstoffes aus dem Vorratsbehälter in die Schmelzkammer bringt im Vergleich mit den bisher üblichen Ausführungsformen eine stark erhöhte Schmelzleistung, ohne daß die thermische Belastung im Vergleich mit der bisher üblichen "Schwerkraft-Förderung" erhöht wird. Dies ist insbesondere für hochviskose und/oder hochempfindliche Werkstoffe wesentlich, beispielsweise Haftschmelzkleber auf der Basis von Polyester oder Polyamiden.

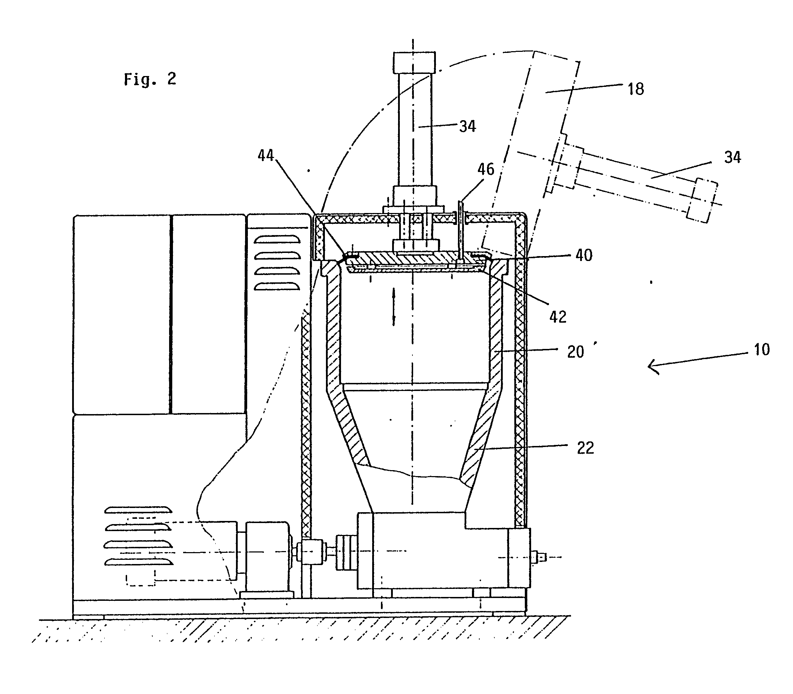

Fig. 2 zeigt eine Modifikation der Vorrichtung 10, die sich nur durch die spezielle Ausgestaltung des Kolbens von der Ausführungsform nach Fig. 1 unterscheidet. Außerdem ist noch eine Gaszuführung vorgesehen.

Der Kolben 40 der Vorrichtung 10 nach Fig. 2 ist an seinem Außenrand mit einer umlaufenden, flexiblen, insbesondere elastischen Dichtung versehen, die an der Innenwand des Bereichs 20 des Vorratsbehälters 20, 22 anliegt. Diese umlaufende Dichtung kann als Manschette ausgebildet sein und aus Gummi bestehen.

Diese Dichtung 44 dient bei Werkstoffen mit niedrigem Erweichungspunkt, die also rasch verflüssigen, dazu, bei der Bewegung des Kolbens 40 nach unten den Austritt des verflüssigten Werkstoffes durch den Spalt zwischen dem Kolben 40 und der Innenwand des Bereichs 20 des Vorratsbehälters 20, 22 auszuschließen.

Weiterhin erstreckt sich ein Rohr 46 für die Zuführung eines Schutzgases, beispielsweise eines inerten Gases oder von getrockneter Luft, durch den Deckel 18 und den Kolben 40 nach unten.

An der Unterseite des Kolbens 40 ist eine Platte 42 befestigt, deren zentraler Bereich sich etwas im Abstand von der Unterseite des Kolbens 40 befindet. Das Gas aus dem Rohr 46 wird also nach dem Verlassen des Kolbens 40 etwas umgelenkt und tritt dann seitlich aus dem Spalt zwischen der Platte 42 und dem plattenförmigen Kolben 40 aus.

Abgesehen von den beschriebenen Modifikationen hat die Ausführungsform nach Fig. 2 den gleichen Aufbau und die gleiche Funktionsweise wie die Ausführungsform nach Fig. 1, so daß sich eine weitere Beschreibung erübrigt.

Die beiden in den Fig. 1 und 2 dargestellten und oben beschriebenen Ausführungsformen sind lotrecht angeordnet, d. h., die beiden Bereiche 20, 22 des Vorratsbehälters befinden sich lotrecht über der Auffangwanne 24. Als Alternative hierzu ermöglicht es die Verwendung des Kolbens 32, 40 jedoch, daß der Vorratbehälter schräg über der Auffangwanne angeordnet wird, da für den Transport des Ausgangs-Werkstoffes nicht mehr die Schwerkraft, sondern der Kolben 32, 40 dient.

Alle mit dem Werkstoff insbesondere mit dem flüssigen Werkstoff in Kontakt kommenden Flächen, insbesondere die Innenflächen von Auffangwanne 23 und Vorratsbehälter, aber auch der Kolben 32, 40 bzw. die Platte 42, sind mit einem Anti-Haftmittel beschichtet, um das Ankleben des Werkstoffes zu verhindern.

## Ansprüche

1. Vorrichtung zum Aufschmelzen von hochpolymeren, themoplastischen Werkstoffen, insbesondere Klebstoffen

a) mit einem Vorratsbehälter für den Ausgangs-Werkstoff,

b) mit einer an den Vorratsbehälter angeschlossenen, beheizbaren Schmelzkammer, und

c) mit einer Fördereinrichtung für den Transport des aufgeschmolzenen Werkstoffes aus der Schmelzkammer zur Verarbeitungsstelle **gekennzeichnet durch**

d) einen in den Vorratsbehälter (20, 22) einschiebbaren Kolben (32, 40) für den Transport des Ausgangs-Werkstoffes aus dem Vorratsbehälter (20, 22) in die Schmelzkammer (24).

2. Vorrichtung nach Anspruch 1, gekennzeichnet durch eine pneumatische Betätigungseinrichtung (34) zur Hin- und Herbewegung des Kolbens (32, 40).

3. Vorrichtung nach einem der Ansprüche 1 oder 2 mit einem abnehmbaren Deckel für den Vorratsbehälter, dadurch gekennzeichnet, daß der Kolben (32, 40) mit dem Deckel (18) verbunden ist.

4. Vorrichtung nach einem der Ansprüche 1 bis 3, dadurch gekennzeichnet, daß der Kolben (40) eine umlaufende, an der Innenwand des Vorratsbehälters (20) anliegende Dichtung (44) aufweist.

5. Vorrichtung nach Anspruch 4, dadurch gekennzeichnet, daß die Dichtung (44) aus einem flexiblen, insbesondere elastisch verformbaren Material, wie einem Elastomer, besteht.

6. Vorrichtung nach einem der Ansprüche 1 bis 5, dadurch gekennzeichnet, daß in den Kolben (32, 40) eine Leitung (46) für die Zuführung eines Schutzgases integriert ist.

7. Vorrichtung nach Anspruch 6, dadurch gekennzeichnet, daß mit dem Kolben (40) eine dem Vorratsbehälter (20) zugewandte Platte (42) verbunden ist, und daß die Leitung (46) in den Spalt zwischen dem Kolben (40) und der Platte (42) angeschlossen ist.

8. Vorrichtung nach einem der Ansprüche 1 bis 7, dadurch gekennzeichnet, daß die dem Vorratsbehälter (20) zugewandte Fläche des Kolbens (32, 40) bzw. der Platte (42) und/oder die Innenwände des Vorratsbehälters (20, 22) bzw. der Auffangwanne (24) mit einem Anti-Haftmittel beschichtet sind.

Fig. 1

EP 0 362 802 A2

Fig. 2

EP 0 362 802 A2